# FASCICULE DE BREVET EUROPEEN

(11) **EP 2 595 819 B1**
(45) Date de publication et mention de la délivrance du brevet: **08.10.2014**
(21) Numéro de dépôt: 11743113.0
(22) Date de dépôt: 13.07.2011
(51) Int. Cl.: B60B 7/06, B60B 7/08, B60B 7/12

(54) **ENJOLIVEUR POUR UNE ROUE D'UN VEHICULE COMPORTANT UN ANNEAU CIRCULAIRE ET PROCEDE DE MONTAGE OU DE DEMONTAGE DE CET ANNEAU SUR L'ENJOLIVEUR**
ZIERBLENDE EINES FAHRZEUGRADES MIT RING UND VERFAHREN ZUR MONTAGE DIESES RINGS AUF DIE ZIERBLENDE ODER ENTFERNUNG DIESES RINGS VON DER ZIERBLENDE
VEHICLE WHEEL TRIM COMPRISING A CIRCULAR ANNULUS AND METHOD FOR FITTING THIS ANNULUS ON OR REMOVING THIS ANNULUS FROM THE TRIM

(30) Priorité: 19.07.2010 FR 1055874
(43) Date de publication de la demande: 29.05.2013
(73) Titulaire: Peugeot Citroën Automobiles SA, 78140 Vélizy Villacoublay (FR)
(72) Inventeur: LARROQUE, Sébastien, F-27200 Vernon (FR)
(74) Mandataire: Rosenberg, Muriel Sylvie
(86) Numéro de dépôt international: PCT/FR2011/051675
(87) Numéro de publication internationale: WO 2012/010778

(56) Documents cités:
- EP-A1- 0 300 333
- EP-A2- 1 375 194
- JP-A- 7 149 104

## Description

La présente invention se rapporte à un enjoliveur pour une jante de roue de véhicule à épaulement intérieur périphérique, comportant un disque de recouvrement circulaire dont une face intérieure est destinée à être positionnée en regard de la jante. L'enjoliveur comporte des moyens de blocage répartis en saillie à la périphérie de la face intérieure du disque de recouvrement et un anneau circulaire destiné à être solidarisé aux moyens de blocage. Au moins une partie des moyens de blocage comportent un pontet juxtaposant une patte flexible mobile entre une position de verrouillage de l'enjoliveur sur la jante et une position de montage ou de démontage de l'enjoliveur sur la jante. Une telle patte flexible est ancrée au disque par son extrémité inférieure et comporte à son extrémité supérieure une excroissance présentant une extrémité avant destinée à venir coopérer avec la jante et une extrémité arrière comportant un logement destiné à recevoir l'anneau

Le document EP-A-1 375 194 comporte les caractéristiques du préambule de la revendication 1 et présente un enjoliveur présentant des moyens de fixation positionnés en périphérie de la surface intérieure du disque de recouvrement circulaire de l'enjoliveur, avec un anneau métallique reliant ces moyens de fixation. Un tel anneau métallique sert à augmenter la pression exercée par les moyens de fixation sur la paroi latérale de la jante et lors du montage de l'enjoliveur, d'éviter qu'une patte flexible d'un des moyens de fixation ne soit rabattue vers le centre de l'enjoliveur au delà de ces capacités de déformation élastique, risquant la rupture de cette patte de fixation.

Ainsi, il est important que l'anneau métallique, qui est livré, par le fabriquant de l'enjoliveur, fixé en position sur les moyens de fixation de l'enjoliveur en usine finale d'assemblage du véhicule, ne se détache d'un des moyens de fixation, fragilisant la patte flexible correspondante lors du montage de l'enjoliveur sur une jante du véhicule.

A cet effet, l'invention a pour objet un enjoliveur pour une jante de roue de véhicule à épaulement intérieur périphérique, comportant un disque de recouvrement circulaire dont une face intérieure est destinée à être positionnée en regard de la jante. L'enjoliveur comporte des moyens de blocage répartis en saillie à la périphérie de la face intérieure du disque de recouvrement et un anneau circulaire destiné à être solidarisé aux moyens de blocage. Au moins un des moyens de blocage comporte un pontet juxtaposant une patte flexible mobile entre une position de verrouillage de l'enjoliveur sur la jante et une position de montage ou de démontage de l'enjoliveur sur la jante. La patte flexible est ancrée au disque par son extrémité inférieure et comportant à son extrémité supérieure une excroissance présentant une extrémité avant destinée à venir coopérer avec la jante et une extrémité arrière comportant un logement destiné à recevoir l'anneau. Le pontet est ancré au disque par son extrémité inférieure et présente à son extrémité supérieure un logement pour l'anneau, faisant que lorsque la patte flexible est dans sa position de montage ou de démontage, le logement de l'anneau est conformé pour s'étendre dans un même plan vertical que le logement de la patte flexible. Le pontet présente à son l'extrémité supérieure une surface d'appui pour l'anneau, s'étendant à l'avant du logement, faisant que lorsque la patte flexible est dans sa position de verrouillage, la surface d'appui du pontet est conformée pour s'étendre dans le même plan vertical que le logement de la patte flexible. Selon l'invention, une fois l'anneau positionné dans le logement de la patte flexible et la patte flexible positionnée dans sa position de verrouillage, l'extrémité supérieure du logement de la patte flexible et la surface d'appui du pontet sont conformées pour former respectivement les surfaces d'appui supérieure et inférieure de l'anneau.

Selon une première caractéristique de l'invention, le logement du pontet juxtapose la surface d'appui, le logement et la surface d'appui du pontet sont alignés suivant un rayon de l'enjoliveur faisant que le logement du pontet est positionné en position arrière du pontet et la surface d'appui est positionnée en position avant du pontet.

Selon une deuxième caractéristique de l'invention, un épaulement arrière, formant une butée arrière, borde vers le haut l'extrémité arrière du logement du pontet.

Selon une troisième caractéristique de l'invention, un épaulement avant, formant une butée avant, borde vers le haut l'extrémité avant de la surface d'appui du pontet.

Selon une quatrième caractéristique de l'invention, chaque moyen de blocage comporte deux pontets positionnés de part et d'autre de la patte flexible.

Selon une dernière caractéristique de l'invention, les moyens de blocage sont régulièrement répartis en périphérie de la face intérieure de l'enjoliveur.

La présente invention concerne aussi un procédé de montage d'un anneau circulaire sur un moyen de blocage d'un enjoliveur comportant l'une quelconque des caractéristiques précédentes. Le moyen de blocage comporte un pontet juxtaposant une patte flexible mobile entre une position de verrouillage de l'enjoliveur sur une jante et une position de montage ou de démontage de l'enjoliveur sur la jante. La patte flexible est ancrée au disque par son extrémité inférieure et comporte à son extrémité supérieure une excroissance présentant une extrémité avant destinée à venir coopérer avec la jante et une extrémité arrière comportant un logement destiné à recevoir l'anneau. Le pontet est ancré au disque par son extrémité inférieure et présente à son extrémité supérieure un logement pour l'anneau conformé pour s'étendre dans un même plan vertical que le logement de la patte flexible lorsque la patte flexible est dans sa position de montage ou de démontage, tel que :
- l'anneau est préalablement positionné dans le logement du pontet du moyen de blocage,
- la patte flexible de ce moyens de blocage est positionnée dans sa position de montage ou de démontage permettant de positionner vers le haut l'anneau dans le logement de la patte flexible, et
- la patte flexible est ensuite positionnée dans sa position de verrouillage, solidarisant l'anneau sur le moyen de blocage.

De même, La présente invention concerne aussi un procédé de démontage d'un anneau circulaire d'un moyen de blocage d'un enjoliveur comportant l'une quelconque des caractéristiques précédentes. Le moyen de blocage comporte un pontet juxtaposant une patte flexible mobile entre une position de verrouillage de l'enjoliveur sur une jante et une position de montage ou de démontage de l'enjoliveur sur la jante. La patte flexible est ancrée au disque par son extrémité inférieure et comporte à son extrémité supérieure une excroissance présentant une extrémité avant destinée à venir coopérer avec la jante et une extrémité arrière comportant un logement dans lequel est positionné l'anneau. Le pontet est ancré au disque par son extrémité inférieure et présente à son extrémité supérieure un logement pour l'anneau conformé pour s'étendre dans un même plan vertical que le logement de la patte flexible lorsque la patte flexible est dans sa position de montage ou de démontage, tel que :
- la patte flexible du moyen de blocage étant préalablement positionnée dans sa position de verrouillage, la patte flexible est positionnée dans sa position de montage ou de démontage,
- l'anneau est positionné vers le bas dans le logement du pontet de ce moyen de blocage, et
- la patte flexible du moyen de blocage est positionnée dans sa position de verrouillage permettant de désolidariser l'anneau du moyen de blocage.

La présente invention concerne aussi un procédé de montage ou de démontage de anneau circulaire sur l'ensemble des moyens de blocage d'un enjoliveur tel que décrit précédemment, consistant à successivement solidariser ou désolidariser chacun des moyens de blocage de enjoliveur selon le procédé de montage ou de démontage sur un moyen de blocage tel que décrit précédemment.

La présente invention concerne enfin un véhicule comportant un enjoliveur tel que décrit précédemment.

D'autres avantages et caractéristiques techniques de la présente invention apparaîtrons plus clairement à la lumière de la description qui suit en référence aux figures des dessins annexés parmi lesquelles :
- La figure 1 représente une vue d'un enjoliveur de roue 1 selon l'invention ;
- La figure 2 représente une vue en perspective d'un des moyens de blocage 2 et d'une partie de l'anneau 3 tels que positionnés sur la face intérieure 12 de l'enjoliveur 1 ; et
- Les figures 3a, 3b et 3c représentent, une vue latérale du moyen de blocage 2 et une vue en coupe de l'anneau 3, durant les différentes étapes permettant l'assemblage de l'anneau 3 sur la patte flexible 4.

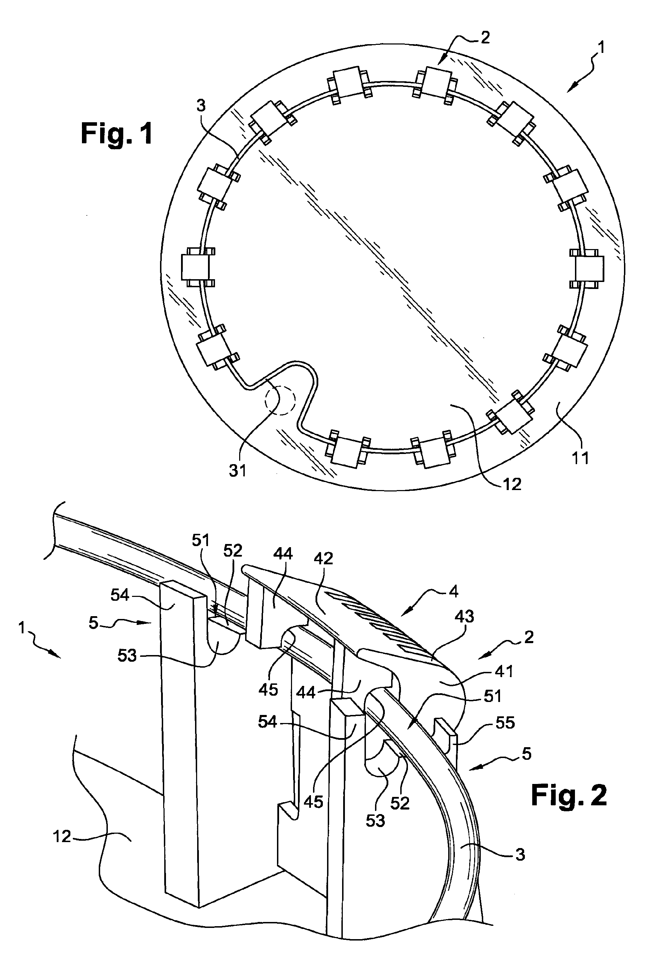

La figure 1 représente une vue d'un enjoliveur de roue 1 comportant un disque de recouvrement circulaire 11 présentant une face extérieure formant la partie visible de l'enjoliveur une fois celui-ci positionné sur une jante d'une roue et une face intérieure 12 destinée à être positionnée en regard de la jante de la roue (la roue n'étant pas représentée). Un ensemble de moyens de blocage 2 sont régulièrement réparties le long d'une bande périphérique de la face intérieure 12 de l'enjoliveur 1. De manière connue, ces moyens de blocage 2 sont destinés à prendre appui le long d'un épaulement intérieur de la jante. Un anneau circulaire 3 prend appui sur les moyens de blocage 2. Un tel anneau 3 forme un élément ressort renforçant la pression radiale exercée par les moyens de blocage 2 le long de l'épaulement intérieur de jante, permettant de maintenir l'enjoliveur 1 en position sur la roue. L'anneau 3 comporte une partie formant une boucle 31 permettant, par déformation de l'écartement de cette boucle 31, de faire varier le diamètre de l'anneau 3.

La figure 2 représente une vue en perspective d'un des moyens de blocage 2 et d'une partie de l'anneau 3 tels que positionnés sur la face intérieure 12 de l'enjoliveur 1. Le moyen de blocage 2 comporte une première partie formant une patte flexible 4 dont l'extrémité libre 41 comporte une excroissance supérieure 42 comportant une extrémité avant 43 destinée à venir en appui le long de l'épaulement intérieur de la jante et une extrémité arrière 44 orientée vers le centre de l'enjoliveur 1. L'extrémité arrière 44 comporte un logement 45, présentant une ouverture orientée en regard de la face intérieure 12 de l'enjoliveur 1, dans lequel est positionné l'anneau 3. De chaque coté de la patte flexible 4 est positionné un pontet 5, qui présente une extrémité supérieure 51 comportant une surface d'appui 52 contre laquelle est en appui inférieur l'anneau 3. L'anneau 3 est ainsi bloqué dans le logement 45 de la patte flexible 4, latéralement par les parois latérales du logement 45 et verticalement entre le fond du logement 45 et la surface d'appui 52 de chacun des deux pontets 5. L'extrémité supérieure 51 de chaque pontet 5 comporte un logement 53 qui, comme expliqué ultérieurement, est destiné à recevoir l'anneau 3. Le bord arrière de chaque pontet 5 (bord positionné vers le centre de l'enjoliveur) se prolonge vers le haut en formant une première paroi 54. Le bord avant de chaque pontet 5 (bord positionné vers l'épaulement intérieur de la jante) se prolonge vers le haut en formant une seconde paroi 55. Le long de l'extrémité supérieure 51 de chaque pontet 5, est donc aligné du bord arrière au bord avant, la première paroi 54, logement 53, la surface d'appui 52 et la seconde paroi 55

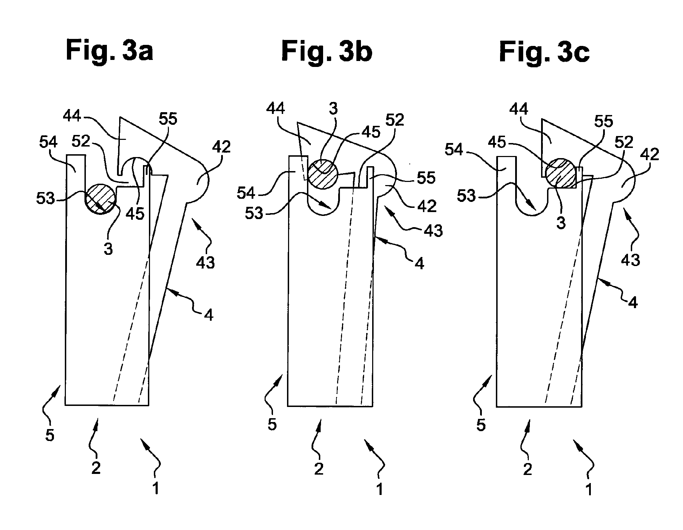

Les figures 3a, 3b et 3c représentent, une vue latérale d'un des moyens de blocage 2 et une vue en coupe de l'anneau 3, durant les différentes étapes permettant l'assemblage de l'anneau 3 sur la patte flexible 4.

La première étape, telle que représentée en figure 3a, consiste à positionner l'anneau 3 dans le logement 53 du pontet 5, la patte flexible 4 étant dans une première position dite de verrouillage. Un tel positionnement correspondant à une position avancée, en direction de l'épaulement intérieur de la jante, de l'extrémité avant 43 de l'excroissance supérieure 42 de la patte flexible 4. Dans cette position de verrouillage, l'ouverture du logement 45 de la patte flexible 4 est en regard de la surface d'appui 52 du pontet 5, ne permettant pas d'y positionner l'anneau 3.

La deuxième étape, telle que représentée en figure 3b, consiste à positionner la patte flexible 4 dans une seconde position dite de montage ou de démontage. Un tel positionnement correspondant à une position reculée, en direction du centre de l'enjoliveur, de la précédente position avancée, de l'extrémité avant 43 de l'excroissance supérieure 42 de la patte flexible 4. Une telle position de montage ou démontage permet le montage ou le démontage de l'enjoliveur 1 de la jante, en éloignant l'excroissance supérieure 42 de la patte flexible 4 de l'épaulement intérieur de la jante. Dans cette position de montage ou de démontage l'ouverture du logement 45 de la patte flexible 4 est dans un même plan vertical que l'ouverture du logement 53 du pontet 5, permettant de faire translater vers le haut l'anneau 3 dans le logement 45 de la patte flexible 4.

La troisième étape, t'elle que représentée en figure 3c, consiste à positionner la patte flexible 4 dans une la position de verrouillage, avec l'anneau 3 positionné dans le logement 45 de la patte flexible 4. Cette troisième position correspondant à la configuration de l'enjoliveur 1 lors de son transport entre l'usine de fabrication et d'assemblage de cet enjoliveur 1 et l'usine finale d'assemblage de l'enjoliveur sur les roues du véhicule.

Ainsi, sauf à refaire précisément et dans l'ordre inverse, les trois étapes d'assemblage de l'anneau 3 sur l'enjoliveur 1, l'anneau 3 ne peut plus être dissocié des différents moyens de blocage 2.

La première paroi 54 du pontet 5 sert à la fois à guider l'opérateur lors du positionnement de l'anneau 3 dans logement 53 du pontet 5 et à limiter le déplacement en arrière de la patte flexible 4 lorsque l'anneau 3 est positionné dans le logement 45 de cette patte flexible 4. Une position trop reculée de cette patte flexible 4 peut lui faire dépasser ces limites de déformation élastique, entraînant une dégradation irréversible de cette patte flexible 4.

La seconde paroi 55 du ponter 5 sert à limiter le déplacement vers l'avant de la patte flexible 4 lorsque l'anneau 3 est positionné dans le logement 45 de cette patte flexible 4. Une position trop avancé de cette patte flexible 4 peut lui faire dépasser ces limites de déformation élastique, entraînant une dégradation irréversible de cette patte flexible 4.

Les différentes étapes permettant l'assemblage de l'anneau 3 sur un des moyens de blocage 2 se répète pour chaque moyen de blocage 2. Ainsi lors de l'assemblage de l'anneau 3 avec un des moyens de blocage 2, l'anneau 3 est déjà préalablement assemblé sur le précédent moyen de blocage, mais non encore assemblé avec le suivant. L'anneau se positionnera naturellement dans l'ouverture du logement 53 du pontet 5, le passage lors de la deuxième étape dans le logement 45 de la patte flexible 4 devant être guidé par l'opérateur.

A l'opposé, une fois l'anneau 3 positionné sur l'enjoliveur 1, si une des pattes flexible 4 d'un moyen de blocage 2 est positionnée dans la position de montage, l'anneau 3, qui est maintenu par les moyens de blocage positionnés de part et d'autre de ce moyen de blocage 2, est naturellement en position haute, dans le logement 45 de la patte flexible 4. Le transfert dans le logement 53 du pontet 5 devant être guidé par l'opérateur.

## Revendications

1. Enjoliveur (1) pour une jante de roue de véhicule à épaulement intérieur périphérique, comportant un disque de recouvrement circulaire (11) dont une face intérieure (12) est destinée à être positionnée en regard de la jante, des moyens de blocage (2) répartis en saillie à la périphérie de la face intérieure (12) du disque de recouvrement (11), un anneau circulaire (3) destiné à être solidarisé avec les moyens de blocage (2), au moins un des moyens de blocage (2) comportant un pontet (5) juxtaposant une patte flexible (4) mobile entre une position de verrouillage de l'enjoliveur (1) sur la jante et une position de montage ou de démontage de l'enjoliveur (1) sur ladite jante, ladite patte flexible (4) étant ancrée au disque par son extrémité inférieure et comportant à son extrémité supérieure une excroissance (42) présentant une extrémité avant (43) destinée à venir coopérer avec la jante et une extrémité arrière (44) comportant un logement (45) destiné à recevoir l'anneau (3), ledit pontet (5) étant ancré au disque par son extrémité inférieure et présentant à son extrémité supérieure (51) un logement (53) pour l'anneau (3), faisant que lorsque la patte flexible (4) est dans sa position de montage ou de démontage, ledit logement (53) de l'anneau (3) étant conformé pour s'étendre dans un même plan vertical que le logement (45) de la patte flexible (4), ledit pontet (5) présentant à son l'extrémité supérieure (51) une surface d'appui (52) pour ledit anneau (3), ladite surface d'appui (52) du pontet (5) s'étendant à l'avant dudit logement (53) du pontet (5), faisant que lorsque ladite patte flexible (4) est dans sa position de verrouillage, ladite surface d'appui (52) du pontet (5) est conformée pour s'étendre dans le même plan vertical que le logement (45) de la patte flexible (4), ledit enjoliveur (1) étant **caractérisé en ce que** l'extrémité supérieure du logement (45) de la patte flexible (4) et la surface d'appui (52) du pontet (5) sont conformées pour former respectivement les surfaces d'appui supérieure et inférieure de l'anneau (3) une fois ledit anneau (3) positionné dans le logement (45) de la patte flexible (4) et ladite patte flexible (4) positionnée dans sa position de verrouillage.

2. Enjoliveur (1) selon la revendication 1, **caractérisé en ce que** le logement (53) du pontet (5) juxtapose la surface d'appui (52), ledit logement (53) du pontet (5) et ladite surface d'appui (52) dudit pontet (5) étant alignés suivant un rayon de l'enjoliveur (1), le logement (53) du pontet (5) étant positionné en position arrière du pontet (5), la surface d'appui (52) dudit pontet (5) étant positionnée en position avant du pontet (5).

3. Enjoliveur (1) selon la revendication 2, **caractérisé en ce qu'**un épaulement arrière (54), formant une butée arrière, borde vers le haut l'extrémité arrière du logement (53) du pontet (5).

4. Enjoliveur (1) selon la revendication 2 ou 3, **caractérisé en ce qu'**un épaulement avant (55), formant une butée avant, borde vers le haut l'extrémité avant de la surface d'appui (52) du pontet (5).

5. Enjoliveur (1) selon l'une quelconque des revendications précédentes, **caractérisé en ce que** chaque moyen de blocage (2) comporte deux pontets (5) positionnés de part et d'autre de la patte flexible (4).

6. Enjoliveur (1) selon l'une quelconque des revendications précédentes, **caractérisé en ce que** les moyens de blocage (2) sont régulièrement répartis en périphérie de la face intérieure (12) de l'enjoliveur (1).

7. Procédé de montage d'un anneau circulaire (3) sur un moyen de blocage (2) d'un enjoliveur (1) selon l'une quelconque des revendications précédentes, le moyens de blocage (2) comportant un pontet (5) juxtaposant une patte flexible (4) mobile entre une position de verrouillage de l'enjoliveur (1) sur une jante et une position de montage ou de démontage de l'enjoliveur (1) sur ladite jante, ladite patte flexible (4) étant ancrée au disque par son extrémité inférieure et comportant à son extrémité supérieure une excroissance (42) présentant une extrémité avant (43) destinée à venir coopérer avec la jante et une extrémité arrière (44) comportant un logement (45) destiné à recevoir l'anneau (3), le pontet (5) étant ancrée au disque par son extrémité inférieure et présentant à son extrémité supérieure (51) un logement (53) pour l'anneau (3) conformé pour s'étendre dans un même plan vertical que le logement (45) de la patte flexible (4) lorsque ladite patte flexible (4) est dans sa position de montage ou de démontage, **caractérisé en ce que** :
- l'anneau (3) est préalablement positionné dans le logement (53) du pontet (5) du moyen de blocage (2),
- la patte flexible (4) dudit moyens de blocage (2) est positionnée dans sa position de montage ou de démontage permettant de positionner vers le haut l'anneau (3) dans le logement (45) de ladite patte flexible (4), et
- la patte flexible (4) est ensuite positionnée dans sa position de verrouillage, solidarisant l'anneau (3) sur le moyen de blocage (2).

8. Procédé de démontage d'un anneau circulaire (3) sur un moyen de blocage (2) d'un enjoliveur (1) selon l'une quelconque des revendications 1 à 6, le moyens de blocage (2) comportant un pontet (5) juxtaposant une patte flexible (4) mobile entre une position de verrouillage de l'enjoliveur (1) sur une jante et une position de montage ou de démontage de l'enjoliveur (1) sur ladite jante, ladite patte flexible (4) étant ancrée au disque par son extrémité inférieure et comportant à son extrémité supérieure une excroissance (42) présentant une extrémité avant (43) destinée à venir coopérer avec la jante et une extrémité arrière (44) comportant un logement (45) dans lequel est positionné l'anneau (3), le pontet (5) étant ancrée au disque par son extrémité inférieure et présentant à son extrémité supérieure (51) un logement (53) pour l'anneau (3) conformé pour s'étendre dans un même plan vertical que le logement (45) de la patte flexible (4) lorsque ladite patte flexible (4) est dans sa position de montage ou de démontage, **caractérisé en ce que** :
- la patte flexible (4) du moyen de blocage (2) étant préalablement positionnée dans sa position de verrouillage, la patte flexible (4) est positionnée dans sa position de montage ou de démontage,
- l'anneau (3) est positionné vers le bas dans le logement (53) du pontet (5) audit moyen de blocage (2), et
- la patte flexible (4) du moyen de blocage (2) est positionnée dans sa position de verrouillage permettant de désolidariser l'anneau (3) au moyen de blocage (2).

9. Procédé de montage ou de démontage d'un anneau circulaire (3) sur l'ensemble des moyens de blocage (2) d'un enjoliveur (1) selon l'une quelconque des revendications 1 à 6, **caractérisé en ce que** l'anneau est successivement solidarisé ou désolidarisé sur chacun des moyens de blocage (2) d'un enjoliveur (1) selon un procédé de montage ou de démontage sur un moyen de blocage (2) selon la revendication 7 ou 8.

10. Véhicule comportant un enjoliveur (1) selon l'une quelconque des revendications 1 à 6.

## Patentansprüche

1. Zierblende (1) für eine Fahrzeugradfelge mit umfänglichem innerem Ansatz, die eine kreisförmige Abdeckscheibe (11) aufweist, von der eine Innenseite (12) dazu bestimmt ist, gegenüber der Felge positioniert zu sein, Blockierungsmittel (2), die an dem Rand der Innenseite (12) der Abdeckscheibe (11) vorstehend verteilt sind, einen kreisförmigen Ring (3), der dazu bestimmt ist, fest mit den Blockierungsmitteln (2) verbunden zu sein, wobei mindestens eines der Blockierungsmittel (2) einen Steg (5) aufweist, der neben einer elastischen Pratze (4) liegt, die zwischen einer Verriegelungsposition der Zierblende (1) auf der Felge und einer Montage-oder Demontageposition der Zierblende (1) auf der Felge beweglich ist, wobei die elastische Pratze (4) an der Scheibe durch ihr unteres Ende verankert ist und an ihrem oberen Ende eine Ausstülpung (42) aufweist, die ein vorderes Ende (43) aufweist, das dazu bestimmt ist, mit der Felge zusammenzuwirken, und ein hinteres Ende (44), das eine Aufnahme (45) aufweist, die dazu bestimmt ist, den Ring (3) aufzunehmen, wobei der Steg (5) an der Scheibe durch sein unteres Ende verankert ist und an seinem oberen Ende (51) eine Aufnahme (53) für den Ring (3) aufweist, die bewirkt, dass, wenn die elastischen Pratze (4) in ihrer Montage- oder Demontageposition ist, die Aufnahme (53) des Rings (3) ausgebildet ist, um sich in ein und derselben vertikalen Ebene wie die Aufnahme (45) der elastischen Pratze (4) zu erstrecken, wobei der Steg (5) an seinem oberen Ende (51) eine Auflageoberfläche (52) für den Ring (3) aufweist, wobei sich die Auflageoberfläche (52) des Stegs (5) an der Vorderseite der Aufnahme (53) des Stegs (5) erstreckt, was bewirkt, dass, wenn die elastische Pratze (4) in ihrer Verriegelungsposition ist, die Auflageoberfläche (52) des Stegs (5) ausgebildet ist, um sich in derselben vertikalen Ebene wie die Aufnahme (45) der elastischen Pratze (4) zu erstrecken, Zierblende (1) **dadurch gekennzeichnet, dass** das obere Ende der Aufnahme (45) der elastischen Pratze (4) und die Auflageoberfläche (52) des Stegs (5) ausgebildet sind, um jeweils eine obere und eine untere Auflageoberfläche des Rings (3) zu bilden, sobald der Ring (3) in der Aufnahme (45) der elastischen Pratze (4) positioniert und die elastische Pratze (4) in ihrer Verriegelungsposition positioniert ist.

2. Zierblende (1) nach Anspruch 1, **dadurch gekennzeichnet, dass** die Aufnahme (53) des Stegs (5) neben der Auflageoberfläche (52) liegt, wobei die Aufnahme (53) des Stegs (5) und die Auflageoberfläche (52) des Stegs (5) entlang eines Radius der Zierblende (1) gefluchtet sind, wobei die Aufnahme (53) des Stegs (5) in hinterer Position des Stegs (5) positioniert ist, wobei die Auflageoberfläche (52) des Stegs (5) in vorderer Position des Stegs (5) positioniert ist.

3. Zierblende (1) nach Anspruch 2, **dadurch gekennzeichnet, dass** der hintere Ansatz (54) der einen hinteren Anschlag bildet, an den oberen hinteren Ende der Aufnahme (53) des Stegs (5) grenzt.

4. Zierblende (1) nach Anspruch 2 oder 3, **dadurch gekennzeichnet, dass** ein vorderer Ansatz (55), der einen vorderen Anschlag bildet, an das obere vordere Ende der Auflageoberfläche (52) des Stegs (5) grenzt.

5. Zierblende (1) nach einem der vorhergehenden Ansprüche, **dadurch gekennzeichnet, dass** jedes Blockierungsmittel (2) zwei Stege (5), die zu beiden Seiten der elastischen Pratze (4) positioniert sind, aufweist.

6. Zierblende (1) nach einem der vorhergehenden Ansprüche, **dadurch gekennzeichnet, dass** die Blockierungsmittel (2) regelmäßig am Umfang der Innenseite (12) der Zierblende (1) verteilt sind.

7. Verfahren zur Montage eines kreisförmigen Rings (3) auf einem Blockierungsmittel (2) einer Zierblende (1) nach einem der vorhergehenden Ansprüche, wobei die Blockierungsmittel (2) einen Steg (5) neben einer elastischen Pratze (4) aufweisen, die zwischen einer Verriegelungsposition der Zierblende (1) auf der Felge und einer Montage- oder Demontageposition der Zierblende (1) der Felge beweglich ist, wobei die elastische Pratze (4) an der Scheibe durch ihr unteres Ende verankert ist und an ihrem oberen Ende eine Ausstülpung (42) aufweist, die ein vorderes Ende (43) aufweist, das dazu bestimmt ist, mit der Felge zusammenzuwirken, und ein hinteres Ende (44), das eine Aufnahme (45) aufweist, die dazu bestimmt ist, den Ring (3) aufzunehmen, wobei der Steg (5) an der Scheibe durch sein unteres Ende verankert ist und an seinem oberen Ende (51) eine Aufnahme (53) für den Ring (3) aufweist, die ausgebildet ist, um sich in ein und derselben vertikalen Ebene wie die Aufnahme (45) der elastischen Pratze (4) zu erstrecken, wenn sich die elastische Pratze (4) in ihrer Montage- oder Demontageposition befindet, **dadurch gekennzeichnet, dass**:
- der Ring (3) zuvor in seiner Aufnahme (53) des Stegs (5) des Blockierungsmittels (2) positioniert wird,
- die elastische Pratze (4) des Blockierungsmittels (2) in ihrer Montage- oder Demontageposition positioniert wird, die es erlaubt, den Ring (3) in der Aufnahme (45) der elastischen Pratze (4) nach oben zu positionieren, und
- die elastische Pratze (4) anschließend in ihrer Verriegelungsposition positioniert wird, die den Ring (3) fest auf dem Blockierungsmittel (2) verbindet.

8. Verfahren zur Demontage eines kreisförmigen Rings (3) auf einem Blockierungsmittel (2) einer Zierblende (1) nach einem der Ansprüche 1 bis 6, wobei die Blockierungsmittel (2) einen Steg (5) neben einer elastischen Pratze (4) aufweisen, die zwischen einer Verriegelungsposition der Zierblende (1) auf einer Felge und einer Montage- oder Demontageposition der Zierblende (1) auf der Felge beweglich ist, wobei die elastische Pratze (4) an der Scheibe durch ihr unteres Ende verankert ist und an ihrem oberen Ende eine Ausstülpung (42) aufweist, die ein vorderes Ende (43) aufweist, das dazu bestimmt ist, mit der Felge zusammenzuwirken, und ein hinteres Ende (44), das eine Aufnahme (45) aufweist, in der der Ring (3) positioniert ist, wobei der Steg (5) an der Scheibe durch sein unteres Ende verankert ist und an seinem oberen Ende (51) eine Aufnahme (53) für den Ring (3) aufweist, die ausgebildet ist, um sich in ein und derselben vertikalen Ebene zu erstrecken wie die Aufnahme (45) der elastischen Pratze (4), wenn sich die elastische Pratze (4) in ihrer Montage- oder Demontageposition befindet, **dadurch gekennzeichnet, dass**:
- die elastische Pratze (4) des Blockierungsmittels (2) zuvor in ihrer Verriegelungsposition positioniert wird, wobei die elastische Pratze (4) in ihrer Montage- oder Demontageposition positioniert wird,
- der Ring (3) in der Aufnahme (53) des Stegs (5) mit dem Blockierungsmittel (2) nach unten positioniert wird, und
- die elastische Pratze (4) des Blockierungsmittels (2) in ihrer Verriegelungsposition positioniert wird, die es erlaubt, den Ring (3) von dem Blockierungsmittel (2) zu trennen.

9. Montage- oder Demontageverfahren eines kreisförmigen Rings (3) auf der Einheit der Blockierungsmittel (2) einer Zierblende (1) nach einem der Ansprüche 1 bis 6, **dadurch gekennzeichnet, dass** der Ring nacheinander auf jedem der Blockierungsmittel (2) einer Zierblende (1) gemäß dem Montage- oder Demontageverfahren auf einem der Blockiermittel (2) nach Anspruch 7 oder 8 fest verbunden oder getrennt wird.

10. Fahrzeug, das eine Zierblende (1) nach einem der Ansprüche 1 bis 6 aufweist.

## Claims

1. A trim (1) for a vehicle wheel rim with a peripheral internal shoulder, comprising a circular cover disc (11), an interior face (12) of which is intended to be positioned facing the rim, immobilizing means (2) distributed in a projecting manner at the periphery of the interior face (12) of the cover disc (11), a circular ring (3) intended to be secured to the immobilizing means (2), at least one of the immobilizing means (2) comprising a hasp (5) juxtaposing a flexible tab (4) movable between a locking position of the trim (1) on the rim and a mounting or dismantling position of the trim (1) on the said rim, the said flexible tab (4) being anchored to the disc by its lower end and comprising at its upper end a protrusion (42) having a front end (43) intended to come to cooperate with the rim and a rear end (44) comprising a housing (45) intended to receive the ring (3), the said hasp (5) being anchored to the disc by its lower end and having at its upper end (51) a housing (53) for the ring (3), so that when the flexible tab (4) is in its mounting or dismantling position, the said housing (53) of the ring (3) is configured to extend in the same vertical plane as the housing (45) of the flexible tab (4), the said hasp (5) having at its upper end (51) a support surface (52) for the said ring (3), the said support surface (52) of the hasp (5) extending at the front of the said housing (53) of the hasp (5), so that when the said flexible tab (4) is in its locking position, the said support surface (52) of the hasp (5) is configured to extend in the same vertical plane as the housing (45) of the flexible tab (4), the said trim (1) being **characterized in that** the upper end of the housing (45) of the flexible tab (4) and the support surface (52) of the hasp (5) are configured to form respectively the upper and lower support surfaces of the ring (3) once the said ring (3) is positioned in the housing (45) of the flexible tab (4) and the said flexible tab (4) is positioned in its locking position.

2. The trim (1) according to Claim 1, **characterized in that** the housing (53) of the hasp (5) juxtaposes the support surface (52), the said housing (53) of the hasp (5) and the said support surface (52) of the said hasp (5) being aligned along a radius of the trim (1), the housing (53) of the hasp (5) being positioned in rear position of the hasp (5), the support surface (52) of the said hasp (5) being positioned in front position of the hasp (5).

3. The trim (1) according to Claim 2, **characterized in that** a rear shoulder (54), forming a rear stop, borders upwards the rear end of the housing (53) of the hasp (5).

4. The trim (1) according to Claim 2 or 3, **characterized in that** a front shoulder (55), forming a front stop, borders upwards the front end of the support surface (52) of the hasp (5).

5. The trim (1) according to any one of the preceding claims, **characterized in that** each immobilizing means (2) comprises two hasps (5) positioned on either side of the flexible tab (4).

6. The trim (1) according to any one of the preceding claims, **characterized in that** the immobilizing means (2) are evenly distributed on the periphery of the interior face (12) of the trim (1).

7. A method for mounting a circular ring (3) on an immobilizing means (2) of a trim (1) according to any one of the preceding claims, the immobilizing means (2) comprising a hasp (5) juxtaposing a flexible tab (4) movable between a locking position of the trim (1) on a rim and a mounting or dismantling position of the trim (1) on the said rim, the said flexible tab (4) being anchored to the disc by its lower end and comprising at its upper end a protrusion (42) having a front end (43) intended to come to cooperate with the rim and a rear end (44) comprising a housing (45) intended to receive the ring (3), the hasp (5) being anchored to the disc by its lower end and having at its upper end (51) a housing (53) for the ring (3) configured to extend in the same vertical plane as the housing (45) of the flexible tab (4) when the said flexible tab (4) is in its mounting or dismantling position, **characterized in that**:
- the ring (3) is previously positioned in the housing (53) of the hasp (5) of the immobilizing means (2),
- the flexible tab (4) of the said immobilizing means (2) is positioned in its mounting or dismantling position permitting the upward positioning of the ring (3) in the housing (45) of the said flexible tab (4), and
- the flexible tab (4) is then positioned in its locking position, securing the ring (3) on the immobilizing means (2).

8. A method for dismantling a circular ring (3) on an immobilizing means (2) of a trim (1) according to any one of Claims 1 to 6, the immobilizing means (2) comprising a hasp (5) juxtaposing a flexible tab (4) movable between a locking position of the trim (1) on a rim and a mounting or dismantling position of the trim (1) on the said rim, the said flexible tab (4) being anchored to the disc by its lower end and comprising at its upper end a protrusion (42) having a front end (43) intended to come to cooperate with the rim and a rear end (44) comprising a housing (45) in which the ring (3) is positioned, the hasp (5) being anchored to the disc by its lower end and having at its upper end (51) a housing (53) for the ring (3) configured to extend in the same vertical plane as the housing (45) of the flexible tab (4) when the said flexible tab (4) is in its mounting or dismantling position, **characterized in that**:
- the flexible tab (4) of the immobilizing means (2) being previously positioned in its locking position, the flexible tab (4) is positioned in its mounting or dismantling position,
- the ring (3) is positioned downwards in the housing (53) of the hasp (5) to the said immobilizing means (2), and
- the flexible tab (4) of the immobilizing means (2) is positioned in its locking position permitting the ring (3) to be freed with respect to the immobilizing means (2).

9. A method for mounting or dismantling a circular ring (3) on the assembly of immobilizing means (2) of a trim (1) according to any one of Claims 1 to 6, **characterized in that** the ring is successively secured or freed with respect to each of the immobilizing means (2) of a trim (1) according to a mounting or dismantling method on an immobilizing means (2) according to Claim 7 or 8.

10. A vehicle comprising a trim (1) according to any one of Claims 1 to 6.
